# EUROPEAN PATENT SPECIFICATION

(11) **EP 3 598 206 B1**
(45) Date of publication and mention of the grant of the patent: **06.08.2025**
(21) Application number: 18767258.9
(22) Date of filing: 06.03.2018
(51) Int. Cl.: G02C 7/00, G02C 7/06, G02C 7/10, G02C 7/08, G02F 1/133, G02B 3/14, G02F 1/1347

(54) **EYEWEAR**
BRILLE
LUNETTES

(30) Priority: 13.03.2017 JP 2017047410
(43) Date of publication of application: 22.01.2020
(73) Proprietor: Carl Zeiss Vision International GmbH, 73430 Aalen (DE)
(72) Inventor: MURAMATSU, Akihiro, Nagoya-shi Aichi 457-8522 (JP); OKADA, Yoshinobu, Nagoya-shi Aichi 457-8522 (JP); HIKOSAKA, Eiichiro, Nagoya-shi Aichi 457-8522 (JP); AONO, Akifumi, Nagoya-shi Aichi 457-8522 (JP)
(74) Representative: Epping - Hermann - Fischer
(86) International application number: PCT/JP2018/008568
(87) International publication number: WO 2018/168570

(56) References cited:
- EP-A1- 3 040 760
- WO-A1-2011/127015
- WO-A1-2011/127015
- WO-A1-2013/088630
- DE-A1- 102014 208 981
- JP-A- 2016 161 807
- JP-B1- 5 947 464
- JP-B2- 5 729 878
- US-A1- 2014 043 584

## Description

### Technical Field

The present invention relates to an eyewear.

### Background Art

In recent years, an electronic device that is wearable by a user (wearable device) has been developed.

For example, PTL 1 discloses an eyewear (glasses) that can control an electrical signal to a liquid crystal lens in accordance with the inclination angle of a main body of the glasses to change the focal length thereof automatically.

PTL 2 discloses an eyewear that causes the focal length of a lens and the like to change by detecting the visual range, the gaze, or the inclination of the head of a user.

PTL 3 discloses sunglasses in which a light intensity sensor detects the light intensity under the usage environments, controls the electrochromic element based on it to change the transmittance, and adjusts the light intensity of the light source of an image display section.

Once the eyesight correction function of the eyewear described in PTLs 1 and 2 turns on, the on-state is always maintained. Similarly, once the dimming function of the sunglasses described in PTL 3 turns on, the on-state is always maintained.

PTL 4 disclose an eyewear. The eyewear includes a frame, an optical module, a sensing section, and a control section. The optical module is disposed on the frame and has an optical property to be changed by electric control. The sensing section acquires information on usage environments.

The control section changes the optical property of the optical module based on the information acquired through the sensing section.

### Citation List

### Patent Literature

PTL 1
   Japanese Patent Application Laid-Open No. S62-009315
PTL 2
   U.S. Patent No. 6517203
PTL 3
   Japanese Patent Application Laid-Open No. 2016-139116
PTL 4
   WO 2011/127015 A1

### Summary of Invention

### Technical Problem

However, depending on the environments (situations) under which the eyewear is used, inconvenience may occur if the eyesight correction function and the dimming function are always maintained. For example, in the case where the dimming function is always maintained, when moving from outdoors to indoors, the problem arises that the field of vision is easily blocked because the dimming function works too much indoors. In particular, even though the sunglasses described in PTL 3 can adjust the transmittance based on the detection results provided by the light intensity sensor, the dimming function itself cannot be automatically turned on or off according to the usage environments. Therefore, an eyewear in which the mode related to whether to change the optical properties, such as on/off of the dimming function, can be switched according to the usage environments is desired.

An object of the present invention, which has been made to solve the aforementioned problem, is to provide an eyewear in which the mode related to whether to change the optical properties can be switched according to the usage environments. This object is solved by the features of the independent claim

One aspect of the present invention is an eyewear including: a frame; an optical module to be disposed on the frame, the optical module having an optical property to be changed by electric control; a sensing section that acquires information on usage environments; and a control section that changes the optical property of the optical module based on the information acquired through the sensing section, in which: the control section performs switching between a mode in which the optical property is changeable and a mode in which the optical property is unchangeable, based on the information acquired through the sensing section, and the control section changes the optical property of the optical module in the mode in which the optical property is changeable.

### Advantageous Effects of Invention

The present invention provides an eyewear in which the mode related to whether to change the optical properties can be switched according to the usage environments.

### Brief Description of Drawings

FIG. 1 is a perspective view illustrating an eyewear according to this embodiment;
FIG. 2 is another perspective view illustrating the eyewear according to this embodiment;
FIG. 3 is a block diagram illustrating an example of the functional configuration of the eyewear according to this embodiment;
FIG. 4 is a schematic cross-sectional view of part A-A of an electrically controlled lens included in the eyewear according to this embodiment;
FIG. 5 is a table showing the relationship of the transmittance of the electrically controlled lens with respect to the illuminance of light on the eyewear in the dimming function and the hybrid function.
FIG. 6 is a flowchart illustrating an operation example of the eyewear according to the embodiment.
FIG. 7 is a flowchart illustrating an operation example of the eyewear for the mode switching mentioned in FIG. 6.
FIGS. 8A, 8B, and 8C are tables summarizing how to set the optical properties according to the usage environments.
FIG. 9 is a table summarizing how to set the optical properties according to the usage environments.
FIG. 10 is a flowchart illustrating another operation example of the eyewear according to the embodiment.
FIG. 11 is a flowchart illustrating still another operation example of the eyewear according to the embodiment.
FIG. 12 is a block diagram illustrating another example of the functional configuration of the eyewear according to the embodiment.

### Description of Embodiments

An eyewear according to this embodiment will now be described.

### (Eyewear)

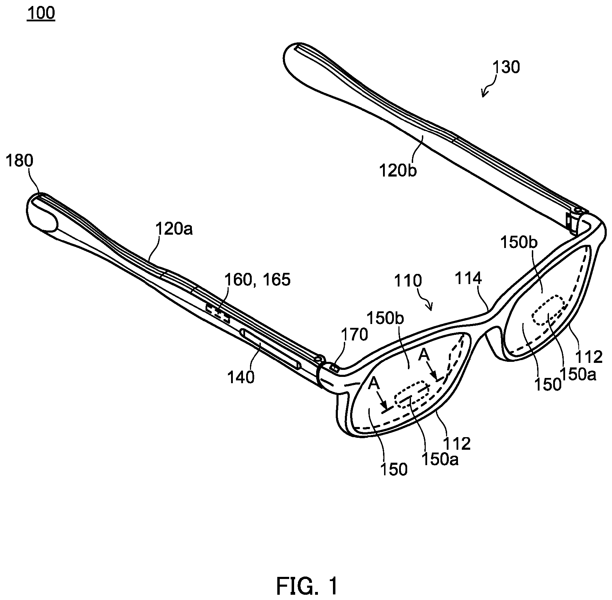

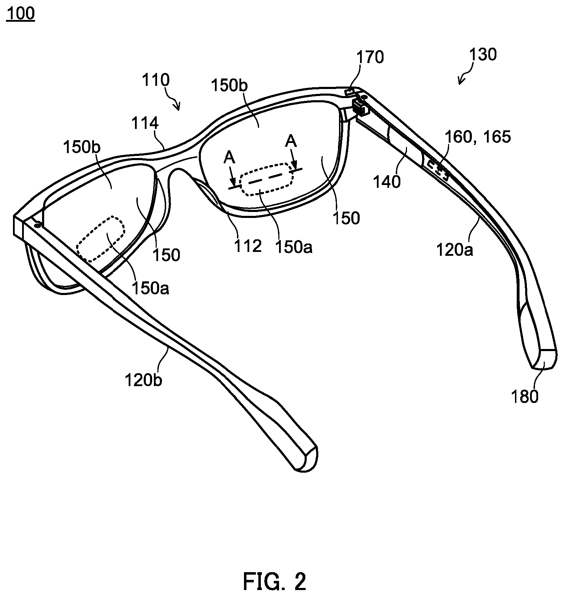

FIGS. 1 and 2 are perspective views showing eyewear 100 according to this embodiment. The eyewear includes, for example, so-called glasses (including electronic glasses and sunglasses) and goggles including an assistance mechanism for improving the eyesight of a user such as an eyesight correction lens, and various devices (for example, a glasses-type wearable terminal, a head mounted display, and the like) including a mechanism that proposes information to the field of vision or the eyes of the user. In this embodiment below, electronic glasses for both eyes including a pair of lenses are described as an example, but the eyewear according to the present invention is not limited to this aspect. The eyewear only needs to have a configuration that holds an assistance mechanism for improving the eyesight or the field of vision for the eyes and a mechanism for proposing information by being worn. The eyewear is not limited to a glasses-type eyewear worn on both ears, and may be an apparatus worn on the head or one of the ears. The eyewear does not necessarily need to be eyewear for both eyes and may also be eyewear that works on only one eye.

As illustrated in FIGS. 1 and 2, eyewear 100 includes frame 130 having front 110 and a pair of temples 120a and 120b, input section 140, a pair of electrically controlled lenses 150, which is an optical module whose optical properties are changed by electric control, control section 160, sensing section 170, and power source 180. Control section 160 includes, for example, arithmetic apparatus 165, such as a CPU unit including a random access memory (RAM), and a read only memory (ROM) that also functions as a storage section, or an arithmetic apparatus such as a CPU unit. The CPU reads out a program for executing the function of eyewear 100 from the ROM and expands it in the RAM, and executes the expanded program to control the operation of each function section of eyewear 100. In the following description, the portion where the pair of electrically controlled lenses 150 is disposed is referred to as the front surface (front side) of eyewear 100.

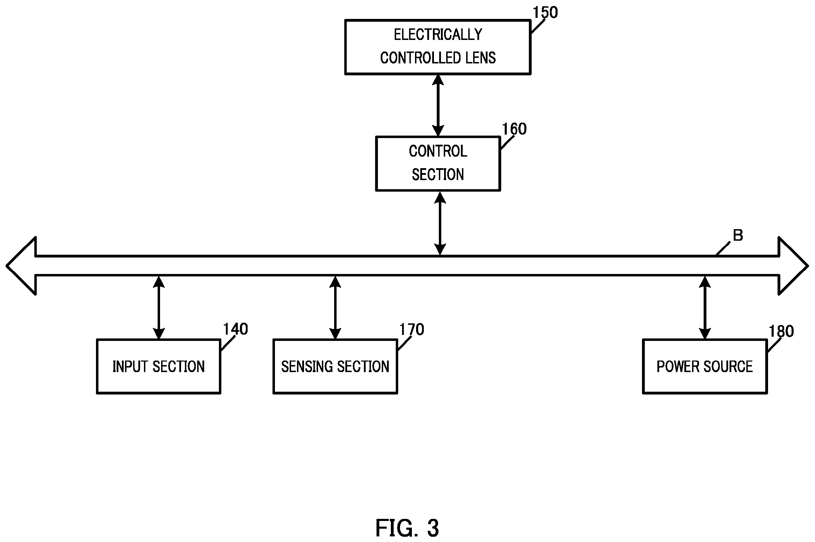

As illustrated in FIG. 3 that is a block diagram illustrating the functional configuration of eyewear 100, the function sections included in eyewear 100 are connected to each other by bus B.

Front 110 holds pair of electrically controlled lenses 150. Front 110 includes pair of rims 112 respectively supporting pair of electrically controlled lenses 150 described above, and bridge 114 connecting pair of rims 112 described above to each other. Rims 112 have shapes corresponding to the shapes of electrically controlled lenses 150. Although not particularly shown, wiring for electrically connecting electrically controlled lenses 150 and CPU unit 165 (control section 160) to each other is disposed in front 110.

The material of front 110 is not particularly limited, and well-known materials used as materials of the front of the glasses can be used. Examples of the material of front 110 include polyamide, acetate, carbon, celluloid, polyetherimide, and polyurethane.

Pair of temples 120a and 120b are rod-like members connected to front 110 so as to be symmetrical, and are connected to front 110 at front end portions thereof. Input section 140, CPU unit 165 (control section 160), sensing section 170, and power source 180 are disposed in one of pair of temples 120a and 120b (temple 120a on the right side in FIG. 1 and FIG. 2).

The material of temples 120a and 120b is not particularly limited, and can be well-known materials used as the material of the temple of the glasses. Examples of the material of temples 120a and 120b include polyamide, acetate, carbon, celluloid, polyetherimide, and polyurethane.

Input section 140 receives input operation from the user wearing the eyewear and the like. Input section 140 may be a plurality of electrostatic capacitive touch sensors arranged in a row from the front side toward the rear side in a region on the outer side and the front side of temple 120a.

Pair of electrically controlled lenses 150 are lenses that are held by front 110 of the frame and include electroactive portions of which optical property changes in accordance with the application of voltage. Each of the electrically controlled lenses may be a spherical lens or may be an aspherical lens. Each of the electrically controlled lenses includes first region 150a capable of changing the focal length (power) and the visible light transmittance thereof in accordance with the application of voltage, and second region 150b capable of changing the visible light transmittance thereof in accordance with the application of voltage.

In the example described below, electrically controlled lenses 150 are, but not limited to, a laminate of transmittance changeable layer 1570 (a first electroactive portion) and refractive index changeable layer 1530 (a second electroactive portion). For example, electrically controlled lenses 150 can be composed of a single layer combining a transmittance/refractive index changeable section whose focal length (power) and the transmittance of visible light changes with voltage application and a transmittance changeable section whose visible light transmittance is changeable with voltage application.

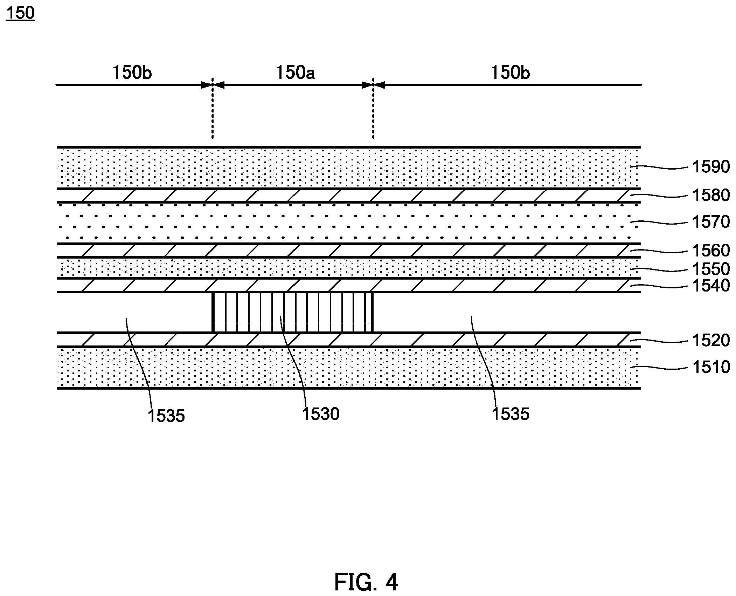

As illustrated in FIG. 4 that is a schematic cross-sectional view of part A-A of an electrically controlled lens 150, first region 150a is formed by laminating first transparent substrate 1510, first transparent electrode 1520, refractive index changeable layer 1530 (second electroactive portion), second transparent electrode 1540, second transparent substrate 1550, third transparent electrode 1560, transmittance changeable layer 1570 (first electroactive portion), fourth transparent electrode 1580, and third transparent substrate 1590 from the rear side (user side) in the order presented.

Note that, although not particularly shown, first transparent substrate 1510 and first transparent electrode 1520, or second transparent substrate 1550 and second transparent electrode 1540 may have a Fresnel lens shape in first region 150a.

As illustrated in FIG. 4, second region 150b is formed by laminating first transparent substrate 1510, first transparent electrode 1520, adhesive layer 1535, second transparent electrode 1540, second transparent substrate 1550, third transparent electrode 1560, transmittance changeable layer 1570 serving as the electroactive portion, fourth transparent electrode 1580, and third transparent substrate 1590 from the rear side (user side) in the order presented.

Note that second transparent electrode 1540 and third transparent electrode 1560 may be a common electrode. At this time, the disposal of second transparent substrate 1550 may be omitted.

First transparent substrate 1510, second transparent substrate 1550, and third transparent substrate 1590 are transparent members curved in a convex shape toward the front side of eyewear 100.

The materials of first transparent substrate 1510, second transparent substrate 1550, and third transparent substrate 1590 are not particularly limited as long as the materials transmit visible light, and may be well-known materials that may be used as the material of the lens. Examples of the materials of first transparent substrate 1510, second transparent substrate 1550, and third transparent substrate 1590 include glass and resin. Examples of the resin include polymethyl methacrylate, polycarbonate, poly(diethylene glycol bis(allyl carbonate)), and polystyrene. The materials of first transparent substrate 1510, second transparent substrate 1550, and third transparent substrate 1590 may be the same or may be different from each other.

First transparent electrode 1520 and second transparent electrode 1540 form a pair of transparent electrodes that transmits light, and third transparent electrode 1560 and fourth transparent electrode 1580 form a pair of transparent electrodes that transmits light.

First transparent electrode 1520 and second transparent electrode 1540 are disposed in a range (first region 150a) in which voltage may be applied to at least refractive index changeable layer 1530, and third transparent electrode 1560 and fourth transparent electrode 1580 are disposed in a range (first region 150a and second region 150b) in which voltage may be applied to at least transmittance changeable layer 1570.

The materials of first transparent electrode 1520, second transparent electrode 1540, third transparent electrode 1560, and fourth transparent electrode 1580 are not particularly limited as long as the materials transmit visible light and have conductivity. Examples of the materials of first transparent electrode 1520, second transparent electrode 1540, third transparent electrode 1560, and fourth transparent electrode 1580 include indium tin oxide (ITO) and zinc oxide (ZnO). The materials of first transparent electrode 1520, second transparent electrode 1540, third transparent electrode 1560, and fourth transparent electrode 1580 may be the same or may be different from each other.

Refractive index changeable layer 1530 is a layer that changes the refractive index of the visible light in accordance with the application of voltage. Examples of the material of refractive index changeable layer 1530 include a cholesteric liquid crystal, a nematic liquid crystal, and the like. When voltage is applied to refractive index changeable layer 1530 by first transparent electrode 1520 and second transparent electrode 1540, the orientation of liquid crystal molecules is changed, and hence the refractive index of refractive index changeable layer 1530 reversibly changes. Therefore, refractive index changeable layer 1530 changes the focal length (power) of first region 150a in accordance with the application of voltage.

Transmittance changeable layer 1570 is a layer that changes the visible light transmittance in accordance with the application of voltage. Examples of the material of transmittance changeable layer 1570 include an electrochromic device, a guest-host liquid crystal, and the like. When voltage is applied to transmittance changeable layer 1570 by third transparent electrode 1560 and fourth transparent electrode 1580, the transmittance of transmittance changeable layer 1570 reversibly changes in accordance with an oxidation-reduction reaction caused by the supplied electrons, the change in orientation of the liquid crystal molecules, and the like. Therefore, transmittance changeable layer 1570 changes the visible light transmittance of first region 150a and second region 150b in accordance with the application of voltage.

Adhesive layer 1535 is disposed between first transparent substrate 1510 and second transparent substrate 1550 in second region 150b and causes first transparent substrate 1510 and second transparent substrate 1550 to adhere to each other. When first transparent electrode 1520 and second transparent electrode 1540 are also disposed in second region 150b, adhesive layer 1535 is disposed between first transparent electrode 1520 and second transparent electrode 1540. Adhesive layer 1535 also has a function of encapsulating the material forming refractive index changeable layer 1530. The material of adhesive layer 1535 is not particularly limited as long as the material is a product obtained by curing an adhesive that transmits visible light.

Sensing section 170 includes a position detect sensor (for example, global positioning system; GPS) that can measure the position of eyewear 100; an illuminance sensor for sensing the illuminance of light; an image pickup device (for example, a camera) for identifying and sensing natural light and fluorescent light; a communication module that can be connected to a predetermined mobile device such as a smartphone via Bluetooth ("Bluetooth" is a registered trademark of Bluetooth SIG) or the like; a proximity sensor for sensing that the user is in the proximity; a contact sensor; an acceleration sensor, an angular velocity sensor, or a gyro sensor that senses the moving state and posture of the user wearing eyewear 100, the wearing state of eyewear 100, and the like; or an inclination sensor that senses the inclination angle of eyewear 100 vertically downward with respect to the horizontal axis.

Sensing section 170 acquires information on the usage environments, specifically, information on user's states such as positional information about the user (for example, indoors, outdoors, home, or road), the light intensity or light source (for example, natural light or fluorescent lamp) under the usage environments, information on an external environment such as the presence/absence of detection of other apparatuses (for example, whether or not a predetermined mobile device is in the proximity); user's activity state (for example, rest, walk, exercise, or movement), user's posture (for example, seated, standing, or supine), an eyewear wearing state (for example, attached or detached), and the inclination of the eyewear (for example, forward-tilt, horizontal, or backward-tilt). It is preferable to acquire especially geographical positional information and light intensity under the usage environments.

Sensing section 170 outputs the acquired information on the usage environments to control section 160.

Control section 160 performs switching between the mode in which the optical property (the refractive index or transmittance) of electrically controlled lenses 150 is changeable and the mode in which the optical property is unchangeable, in accordance with the information acquired through sensing section 170 or input section 140. Control section 160 changes the optical property of electrically controlled lenses 150 in the mode in which the optical property of electrically controlled lenses 150 is changeable.

"The changeable mode" is, for example, the state in which control section 160 changes the optical property (refractive index or transmittance) of electrically controlled lenses 150 in accordance with inputs from input section 140 or sensing section 170. Meanwhile, "the unchangeable mode" is, for example, the state in which sensing section 170 or input section 140 cannot detect any input or the state in which control section 160 does not change the optical property (refractive index or transmittance) of electrically controlled lenses 150 in accordance with inputs from input section 140 or sensing section 170.

In "the changeable mode", control section 160 changes the optical property in accordance with an external environment detected through sensing section 170 and the user's operation on input section 140. In other words, it can be said that in "the changeable mode", the function actuated by the optical property is turned on/off in accordance with the external environment detected through sensing section 170 and the user's operation on input section 140.

On the other hand, in "the unchangeable mode", control section 160 does not change the optical property even if sensing section 170 or input section 140 is in the off state or sleep state or sensing section 170 or input section 140 detects an input. In other words, in "the unchangeable mode", the function actuated by the optical property remains the same (for example, the function remains off state).

To be specific, control section 160 is electrically connected to first transparent electrode 1520, second transparent electrode 1540, third transparent electrode 1560, and fourth transparent electrode 1580 of electrically controlled lenses 150, input section 140, and sensing section 170. Control section 160 determines whether to perform switching between the mode in which the optical property of electrically controlled lenses 150 is changeable and the mode in which it is unchangeable, in accordance with the information acquired through sensing section 170. When control section 160 determines that switching between the mode in which the optical property of electrically controlled lenses 150 is changeable and the mode in which it is unchangeable is necessary, voltage is applied to any one of first transparent electrode 1520, second transparent electrode 1540, third transparent electrode 1560, and fourth transparent electrode 1580 to perform switching between the mode in which the optical property of electrically controlled lenses 150 (refractive index or transmittance) is changeable and the mode in which it is unchangeable. When the mode in which the optical property of electrically controlled lenses 150 (refractive index or transmittance) is changeable is selected, control section 160 changes the optical property of electrically controlled lenses 150 in accordance with information acquired through sensing section 170 or in response to an input received on input section 140 from the user.

Switching between the mode in which the optical property of electrically controlled lenses 150 is changeable and the mode in which it is unchangeable is basically made automatically and manual switching can be made selective as needed. To be specific, when information acquired through sensing section 170 satisfies a predetermined condition, control section 160 preferably performs switching between the mode in which the optical property is changeable and the mode in which it is unchangeable (automatic mode switching); alternatively, upon reception of input operation on input section 140 from the user, switching between the mode in which the optical property is changeable and the mode in which it is unchangeable (manual mode switching) can be made selective.

Selection of whether to perform manual mode switching may be set to default, may be set by input operation of the user, or may be set according to determination made by control section 160. The input operation of the user may be received only when control section 160 determines that mode switching is necessary, or may be received anytime regardless of that.

When control section 160 selects the mode in which the optical property is changeable, the adjustment of the optical properties (parameters) may be performed automatically or manually. To be specific, the mode in which the optical property is changeable includes the automatic mode (also referred to as on-automatic mode) in which control section 160 changes the optical properties in accordance with information acquired through sensing section 170, and the manual mode (also referred to as on-manual mode) in which the optical properties are changed upon reception of input operation of the user, and it is preferable that either of them be selectively executable. It is especially preferable that when the mode in which the optical property is changeable is selected, control section 160 execute the automatic mode (on-automatic mode) in which the optical properties are changed, in accordance with information acquired through sensing section 170.

Selection of automatic or manual to adjust the optical properties may be set to default, may be set by input operation of the user, or may be set according to determination made by control section 160. The input operation of the user may be received only when control section 160 determines that mode switching is necessary, or may be received anytime regardless of that.

In this embodiment, the types of optical properties to be changed by control section 160 include transmittance and refractive index. Control section 160 may change only one of these optical properties, or may change both of them. In other words, control section 160 may have a dimming function for changing the transmittance of electrically controlled lenses 150 for dimming, an eyesight correction function for changing the refractive index of electrically controlled lenses 150 for eyesight correction, and a hybrid function for changing both the transmittance and the refractive index of electrically controlled lenses 150.

It is especially preferable that the mode in which the optical property is changeable include a transmittance (first optical property) changeable mode in which the transmittance (first optical property) of electrically controlled lenses 150 is changed, and a refractive index (second optical property) changeable mode in which the refractive index (second optical property) of electrically controlled lenses 150 is changed. It is especially preferable that control section 160 perform switching between the mode in which the optical property is changeable and the mode in which the optical property is unchangeable in accordance with the geographical positional information and the light intensity under the usage environments.

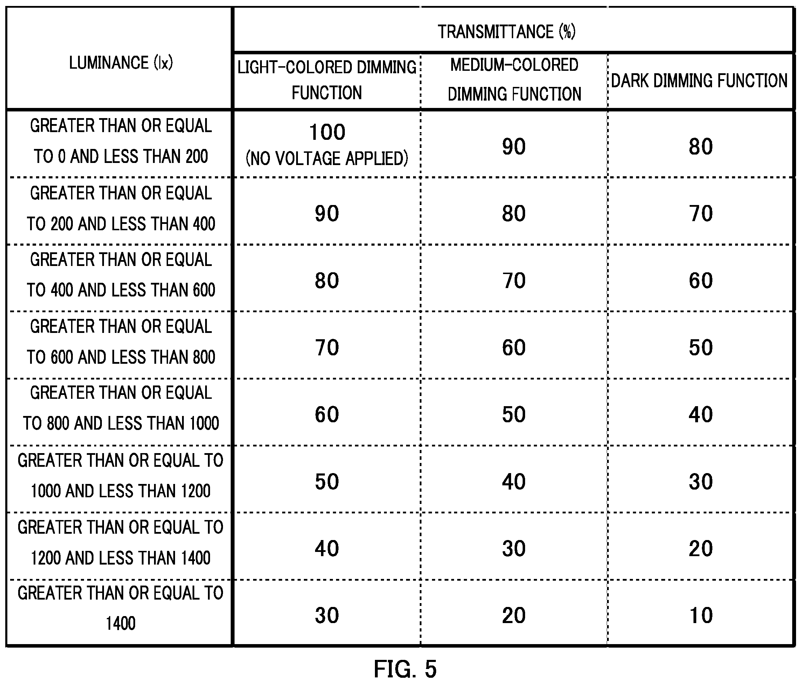

When control section 160 selects the mode in which the optical property is changeable, control section 160 may change the optical properties of electrically controlled lenses 150 between two levels of on and off, or between three or more levels. For example, in this embodiment, the dimming function and the hybrid function may include a dimming function of changing the transmittance of electrically controlled lenses 150 with respect to the illuminance of light to eyewear 100 between multiple levels as shown in FIG. 5.

When control section 160 selects the mode in which the optical property is unchangeable, control section 160 may maintain the optical properties of electrically controlled lenses 150 or change the optical properties to a default value and maintain this default value.

Power source 180 is a rechargeable battery pack detachably held at the rear end of temple 120a, and supplies electric power to function sections that consume electric power, such as input section 140, control section 160, and sensing section 170. Examples of power source 180 include a nickel metal hydride battery.

### (Examples of Use of Eyewear)

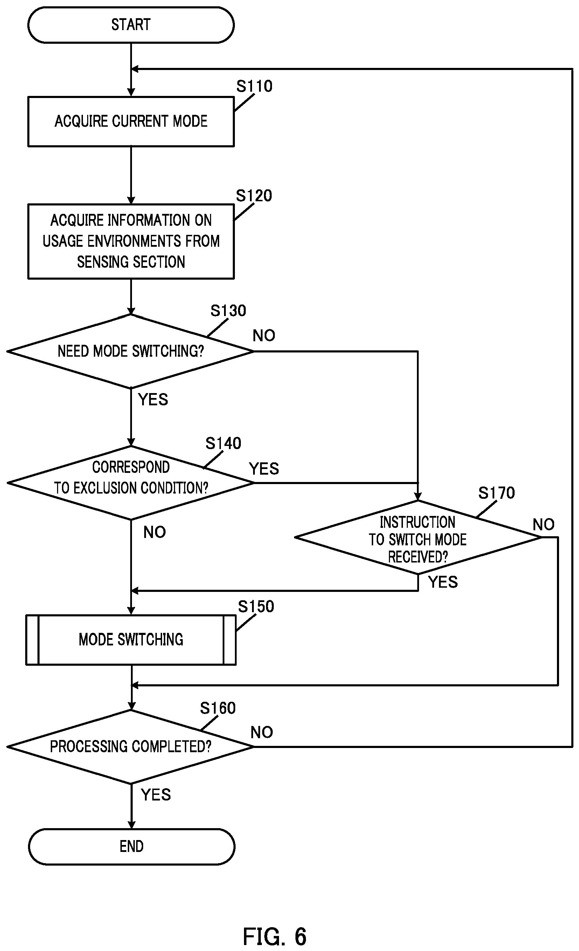

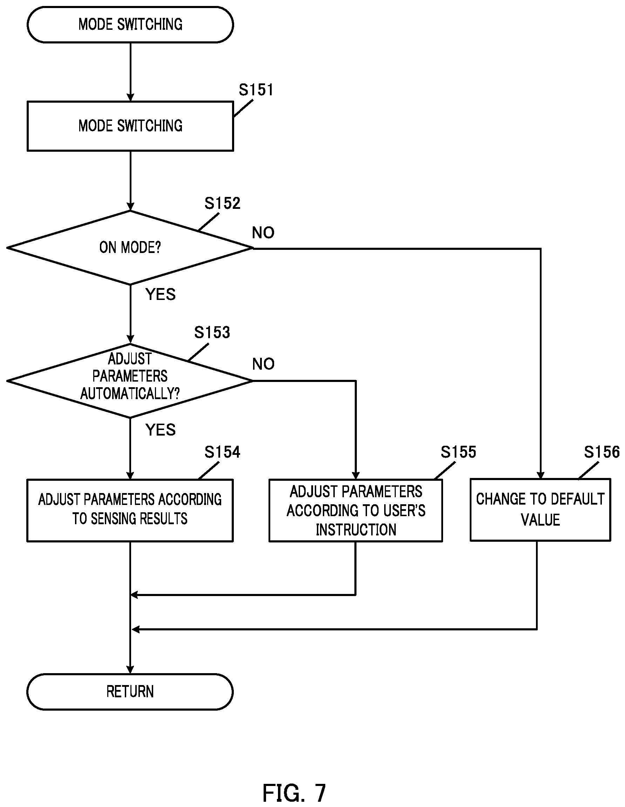

FIG. 6 is a flowchart illustrating an operation example of eyewear 100 at the time of automatic switching between the mode in which the optical property of electrically controlled lenses 150 is changeable (function-on mode) and the mode in which it is unchangeable (function-off mode) in accordance with the usage environments in this embodiment. FIG. 7 is a flow chart illustrating an operation example of eyewear 100 at the time of switching the mode for the optical properties of electrically controlled lenses 150.

In this embodiment, the "mode in which the optical property is changeable", which is the state in which the function actuated by the optical properties can be turned on as described above, is referred to as "function-on mode". The "mode in which the optical property is unchangeable", which is for example the mode in which the function remains off state here, is referred to as "function-off mode".

### (1) Mode Switching Related to Dimming Function

An example in which automatic switching between the mode in which the transmittance of electrically controlled lenses 150 is changeable (dimming function-on mode) and the mode in which it is unchangeable (dimming function-off mode) (automatic switching of the mode of the dimming function) is performed in accordance with the usage environments (especially external environments) will be explained with reference to FIGS. 6, 7 and 8A.

In this embodiment, the "dimming function-on mode" is the mode in which the transmittance of the electroactive portion of electrically controlled lenses 150 is changed according to the acquired geographical positional information and light intensity, and the "dimming function-off mode" is the mode in which the transmittance of the electroactive portion of electrically controlled lenses 150 is not changed, for example, the mode in which the transmittance of the electroactive portion is kept unchanged from a high level (for example, a predetermined value greater than or equal to 90%).

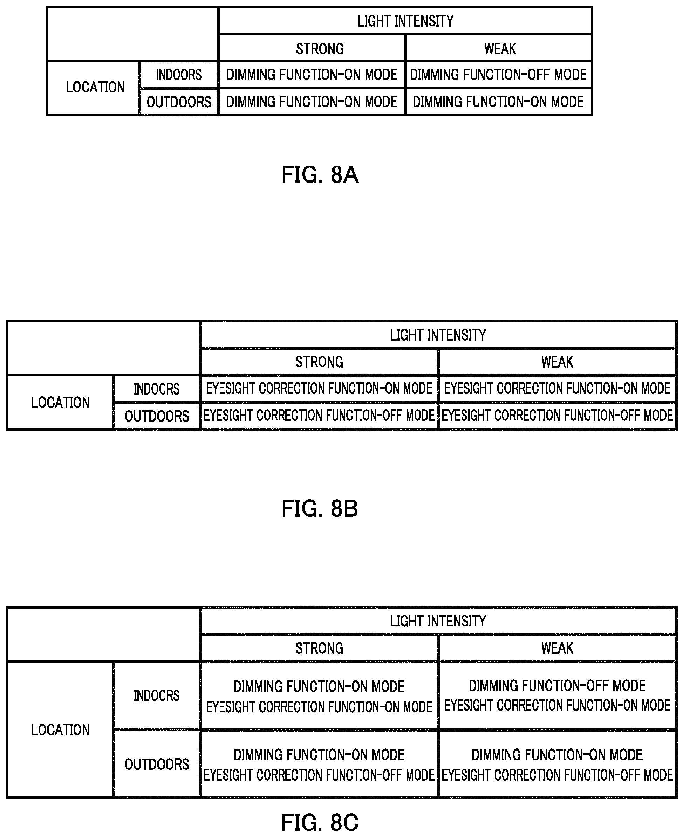

FIG. 8A is a table summarizing how to set the dimming function of eyewear 100 according to the external environments. In FIG. 8A, for example, when the light intensity is stronger than a predetermined value (regardless of whether being outdoors or indoors) or when being outdoors even if the light intensity is weaker than a predetermined value, the dimming function-on mode is selected, and when the light intensity is weaker than a predetermined value and when being indoors, the dimming function-off mode is selected.

The operation illustrated in FIG. 6 is started, for example, when attachment of power source 180 brings input section 140, control section 160, and sensing section 170 into the on state.

First, control section 160 determines the current mode (Step S110). For example, the RAM serving as a storage section included in control section 160 stores, of the multiple modes that can be executed by eyewear 100, the mode currently executed. Control section 160 reads out the mode currently executed from the RAM, and determines the current mode.

Next, control section 160 acquires information on the usage environments from sensing section 170, and performs predetermined determination processing (Step S120). To be specific, control section 160 compares the geographical positional information about eyewear 100 acquired from the position detect sensor (GPS) with the map database acquired in advance in order to determine whether eyewear 100 is indoors or outdoors. Further, the light intensity (for example, strong or weak) under the usage environments is determined by comparing the output from the acquired light intensity sensor with a predetermined threshold (see FIG. 8A).

Here, control section 160 associates geographical positional information acquired from the position detect sensor and information indicating whether being indoors or outdoors determined based on this; and the light intensity under the usage environments acquired from the light intensity sensor and information on the intensity (strong or weak) of light determined based on this, with the time when they were acquired, and stores them in the RAM. Control section 160 then compares the information on the usage environments acquired in this step and the related determination results with the information on the usage environments acquired in the past and read out from the RAM and the related determination results, thereby performing predetermined determination processing.

Next, control section 160 determines whether it is necessary to switch the mode of the dimming function based on the information acquired through sensing section 170 (Step S130).

For example, when determining, according to the results obtained in Step S120, that in the usage environments of eyewear 100, the location has changed from indoors to outdoors with light intensity remaining weak (the upper right cell to the lower right cell in FIG. 8A), control section 160 determines that switching from the dimming function-off mode to the dimming function-on mode is necessary (Determination 1). Because the location is outdoors even with weak light intensity, turning on the dimming function lowers the transmittance of light and can protect user's eyes from sudden sunlight.

In contrast, when determining, according to the results obtained in Step S120, that in the usage environments of eyewear 100, the state with weak light intensity has changed to the state with strong light intensity and the location has changed from outdoors to indoors (the lower right cell to the upper left cell in FIG. 8A), control section 160 maintains the dimming function-on mode without switching to the dimming function-off mode (Determination 2). Because the light intensity is strong even if the location is indoors, keeping the dimming function on can protect user's eyes.

In Step S130, information on the usage environments acquired in the past that has been acquired in Step S120 is compared with the currently acquired usage environments to determine changes in the environments; however, this is not necessarily the case. For example, determination related to the switching of the mode may be made based on the information on the currently acquired usage environments in accordance with the table shown in FIG. 8A without using the information on the usage environments acquired in the past.

If control section 160 determines that switching of the mode of the dimming function is necessary in Step S130, control section 160 further determines whether the information acquired through sensing section 170 corresponds to an exclusion condition (Step S140). Examples of exclusion conditions include driving and going up or down stairs. Control section 160 checks whether or not it corresponds to an exclusion condition in accordance with information acquired through sensing section 170.

If control section 160 determines that it does not correspond to an exclusion condition in Step S140, control section 160 switches the mode of the dimming function (Step S150). For example, if control section 160 gives Determination 1 described above in Step S130, control section 160 switches the mode of the dimming function from off to on (the upper right cell to the lower right cell in FIG. 8A). The operation for switching the mode of the dimming function (Step S150) will be described later.

In contrast, if control section 160 determines that switching of the mode of the dimming function is unnecessary in Step S130 or if control section 160 determines that the information acquired through sensing section 170 corresponds to an exclusion condition in Step S140, control section 160 further determines whether the input operation for switching the mode has been received from the user (Step S170).

If control section 160 determines that input operation of the user on input section 140 has been received in Step S170, control section 160 switches the mode of the dimming function (Step S150). For example, input section 140 is a touch sensor that switches the mode of the dimming function according to the touch operation by the user. In contrast, if control section 160 determines that the input operation has not been received from the user, the processing proceeds to Step S160.

For example, if control section 160 gives Determination 2 described above in Step S130, control section 160 does not switch the mode of the dimming function unless an instruction is received from the user, and the processing proceeds to Step S160 where the dimming function-on mode is maintained (the lower right cell to the upper left cell in FIG. 8A).

In Step S150 after switching of the mode of the dimming function, the switched mode of the dimming function is recorded in the RAM, and control section 160 determines whether to complete the processing (Step S160). When a predetermined condition for ending the processing is satisfied, control section 160 determines that the processing needs to be ended. In contrast, when the aforementioned condition is not satisfied, it determines that the processing need not be ended. If it is necessary to end the processing according to the determination, the processing in FIG. 6 is ended. In contrast, if it is not necessary to end the processing, the processing returns to before Step S110.

The operation for switching the mode of the dimming function (Step S150) will be described with reference to FIG. 7.

In Step S151, control section 160 switches the mode of the dimming function. Next, control section 160 determines whether the mode after switching is the dimming function-on mode (Step S152).

For example, the "dimming function-on mode" includes two modes. One is the "dimming function on-automatic mode" in which the adjustment (parameter adjustment) of the transmittance of the electroactive portion of electrically controlled lenses 150 is automatically performed without the input operation of the user, and the other is the "dimming function on-manual mode" in which the transmittance of the electroactive portion of electrically controlled lenses 150 is adjusted according to the input operation of the user.

If control section 160 determines that the mode after switching is the dimming function-on mode in Step S152, control section 160 further determines whether it is the mode in which the adjustment (parameter adjustment) of the transmittance of the electroactive portion of electrically controlled lenses 150 is performed automatically (whether it is the "dimming function on-automatic mode") (Step S153).

If control section 160 determines that it is the "dimming function on-automatic mode" in Step S153, control section 160 performs the adjustment of transmittance of electrically controlled lenses 150 when the information acquired through sensing section 170 satisfies a predetermined condition (Step S154).

If control section 160 determines that it is not the mode in which the adjustment of the transmittance is performed automatically (that it is the "dimming function on-manual mode") in Step S153, control section 160 performs the adjustment of the transmittance of electrically controlled lenses 150 in response to user's input instruction from input section 140 (Step S155).

If control section 160 determines that the mode after switching is the dimming function-off mode in Step S152, control section 160 changes the transmittance of electrically controlled lenses 150 to a default value (Step S156). The processing then returns to Step S150 illustrated in FIG. 6.

For example, if the mode of the dimming function is switched in Step S151, control section 160 determines whether the mode after switching is the dimming function-on mode in Step S152. If control section 160 determines that the mode after switching is the dimming function-on mode, control section 160 further determines whether to automatically adjust the transmittance (whether it is the "dimming function on-automatic mode") in Step S153. If control section 160 determines that the transmittance is to be adjusted automatically (that it is the "dimming function on-automatic mode"), the transmittance is changed based on the information acquired through sensing section 170, for example, to a transmittance of 50%. Similarly, the transmittance can be changed based on the information from sensing section 170 afterwards.

In contrast, if control section 160 determines that it is not the mode in which the adjustment of the transmittance is performed automatically (that it is the "dimming function on-manual mode") in Step S153, the transmittance is changed according to a user's input instruction, for example, to a transmittance of 50%. Similarly, the transmittance can be changed according to an input instruction from the user to input section 140 afterwards.

If control section 160 determines that the mode after switching is the dimming function-off mode in Step S152, control section 160 changes the transmittance, for example, to a high default value (for example, a value close to 100%) to make the eyewear transparent in Step S156. Unless the mode is changed, control section 160 does not change the transmittance afterwards.

### (2) Mode Switching Related to Eyesight Correction Function

An example in which automatic switching between the mode in which the refractive index of electrically controlled lenses 150 is changeable and the mode in which it is unchangeable (automatic switching of the mode of the eyesight correction function) is performed in accordance with the usage environments (especially external environments) will be explained with reference to FIGS. 6, 7 and 8B.

In this embodiment, the "eyesight correction function-on mode" is the mode in which the refractive index of the electroactive portion of electrically controlled lenses 150 is changed according to the acquired geographical positional information and light intensity, and the "eyesight correction function-off mode" is the mode in which the refractive index of the electroactive portion of electrically controlled lenses 150 is not changed.

FIG. 8B is a table summarizing how to set a mode related to the eyesight correction function of an eyewear according to the external environments. In FIG. 8B, for example, when the location is indoors (regardless of whether the light intensity is stronger or weaker than a predetermined value), the eyesight correction function-on mode is selected, and when the location is outdoors (regardless of whether the light intensity is stronger or weaker than a predetermined value), the eyesight correction function-off mode is selected.

Steps S110 and S120 are the same as described above.

In Step S130, control section 160 determines whether it is necessary to switch the mode of the eyesight correction function based on the information acquired through sensing section 170.

For example, when determining, according to the results obtained in Step S120, that in the usage environments of eyewear 100, the location has changed from outdoors to indoors (the lower cell to the upper cell in FIG. 8B), control section 160 determines that switching from the eyesight correction function-off mode to the eyesight correction function-on mode is necessary (Determination 3). Because the location is indoors, turning on the eyesight correction function can adjust the refractive index and enhance the visibility indoors.

In contrast, when determining, according to the results obtained in Step S120, that in the usage environments of eyewear 100, the state with strong light intensity has changed to the state with weak light intensity and the location is indoors (the upper left cell to the upper right cell in FIG. 8B), control section 160 maintains the eyesight correction function-on mode without switching to the eyesight correction function-off mode (Determination 4). Because it is indoors, keeping the eyesight correction function on can ensure user's view.

If control section 160 determines that switching of the mode of the eyesight correction function is necessary in Step S130, control section 160 further determines whether the information acquired through sensing section 170 corresponds to an exclusion condition (Step S140) in the same manner as described above. If control section 160 determines that it does not correspond to an exclusion condition, control section 160 switches the mode of the eyesight correction function (Step S150). For example, if control section 160 gives Determination 3 described above in Step S130, control section 160 switches the mode of the eyesight correction function from off to on (the lower cell to the upper cell in FIG. 8B). The processing then proceeds to Step S160.

In contrast, if control section 160 determines that switching of the mode of the eyesight correction function is unnecessary in Step S130 or if control section 160 determines that the information acquired through sensing section 170 corresponds to an exclusion condition in Step S140, the processing proceeds to Step S170. For example, if control section 160 gives Determination 4 described above in Step S130, control section 160 does not switch the mode of the eyesight correction function and maintains the eyesight correction function-on mode (the upper left cell to the upper right cell in FIG. 8B).

Steps S160 and S170 are the same as the respective steps described above.

The operation for switching the mode of the eyesight correction function (Step S150) can be performed in the same manner as described above.

For example, if the mode of the eyesight correction function is switched in Step S151, control section 160 determines whether the mode after switching is the eyesight correction function-on mode in Step S152.

For example, the "eyesight correction function-on mode" includes two modes. One is the "eyesight correction function on-automatic mode" in which the adjustment (parameter adjustment) of the refractive index of the electroactive portion of electrically controlled lenses 150 is automatically performed without the input operation of the user, and the other is the "eyesight correction function on-manual mode" in which the refractive index of the electroactive portion of electrically controlled lenses 150 is adjusted according to the input operation of the user.

If control section 160 determines that the mode after switching is the eyesight correction function-on mode, control section 160 further determines whether to automatically adjust the refractive index (whether it is the "eyesight correction function on-automatic mode") in Step S153. If control section 160 determines that it is the "eyesight correction function on-automatic mode", the refractive index is changed based on the information acquired through sensing section 170. Similarly, the refractive index can be changed based on the information acquired through sensing section 170 afterwards.

In contrast, if control section 160 determines that it is not the "eyesight correction function on-automatic mode" (that it is the eyesight correction function on-manual mode) in Step S153, the refractive index is changed according to a user's input instruction. Similarly, the refractive index can be changed according to an input instruction from the user to input section 140 afterwards.

If control section 160 determines that the mode after switching is the eyesight correction function-off mode in Step S152, control section 160 changes the refractive index, for example, to a default value in Step S156. Control section 160 does not change the refractive index afterwards.

### (3) Mode Switching Related to Combined Use of Dimming Function and Eyesight Correction Function (Case 1)

An example in which automatic switching between the mode in which both the transmittance and the refractive index of electrically controlled lenses 150 are changeable and the mode in which they are unchangeable (automatic switching of both the dimming function and the eyesight correction function) is performed in accordance with the usage environments (especially external environments) will be explained with reference to FIGS. 6, 7 and 8C.

In this embodiment, the "dimming function-on mode" and the "dimming function-off mode" are synonymous with the "dimming function-on mode" and the "dimming function-off mode" in (1) described above, respectively, and the "eyesight correction function-on mode" and the "eyesight correction function-off mode" are synonymous with the "eyesight correction function-on mode" and the "eyesight correction function-off mode" of electrically controlled lenses 150 of (2) described above, respectively.

FIG. 8C is a table summarizing how to set the dimming function and the eyesight correction function of eyewear 100 according to the external environments. In FIG. 8C, for example, when the light intensity is stronger than a predetermined value (regardless of whether being outdoors or indoors) or when being outdoors even if the light intensity is weaker than a predetermined value, the dimming function-on mode is selected, and when the light intensity is weaker than a predetermined value and when being indoors, the dimming function-off mode is selected. In addition, when the location is indoors (regardless of whether the light intensity is stronger or weaker than a predetermined value), the eyesight correction function-on mode is selected, and when the location is outdoors (regardless of whether the light intensity is stronger or weaker than a predetermined value), the eyesight correction function-off mode is selected.

Steps S110 and S120 are as described above.

In Step S130, control section 160 determines whether it is necessary to switch the modes of the dimming function and the eyesight correction function based on the information acquired through sensing section 170.

For example, when determining, according to the results obtained in Step S120, that in the usage environments of eyewear 100, the location has changed from outdoors to indoors with the light intensity remaining weak (the lower right cell to the upper right cell in FIG. 8C), control section 160 determines that switching from the dimming function-on mode to the dimming function-off mode and switching from the eyesight correction function-off mode to the eyesight correction function-on mode are necessary (Determination 5). Because the location is indoors, turning off the dimming function and turning on the eyesight correction function can ensure user's view indoors.

When determining, according to the results obtained in Step S120, that in the usage environments of eyewear 100, the state with weak light intensity has changed to the state with strong light intensity and the location has changed from outdoors to indoors (the lower right cell to the upper left cell in FIG. 8C), control section 160 maintains the dimming function-on mode without switching to the dimming function-off mode; and determines that switching from the eyesight correction function-off mode to the eyesight correction function-on mode is necessary (Determination 6). Because the light intensity is strong even if the location is indoors, keeping the dimming function on and turning on the eyesight correction function can ensure user's view indoors.

If control section 160 determines that switching of the modes of the dimming function and the eyesight correction function are necessary in step S130, control section 160 further determines whether the information acquired through sensing section 170 corresponds to an exclusion condition (Step S140). If control section 160 determines that it does not correspond to an exclusion condition, control section 160 switches the modes of the dimming function and the eyesight correction function (Step S150).

For example, if control section 160 gives Determination 5 described above in Step S130, the mode of the dimming function is switched from on to off and the mode of the eyesight correction function is switched from off to on (the lower right cell to the upper right cell in FIG. 8C). The processing then proceeds to Step S160.

In contrast, if control section 160 determines that switching of the modes of the dimming function and the eyesight correction function is unnecessary in Step S130 or if control section 160 determines that the information acquired through sensing section 170 corresponds to an exclusion condition in Step S140, the processing proceeds to Step S170.

For example, in Step S130, if control section 160 gives Determination 6 described above, for the mode of the dimming function, the processing proceeds to Step S170, and unless an instruction to switch the mode is received from the user, the processing proceeds to Step S160. Control section 160 then ends the processing in Step S160 or returns to before Step S110 to maintain the dimming function-on mode (the lower right cell to the upper left cell in FIG. 8C). In contrast, the mode of the eyesight correction function is switched from off to on as described above (the lower right cell to the upper left cell in FIG. 8C). The processing then proceeds to Step S160.

Steps S160 and S170 are the same as the respective steps described above.

The operation for switching the modes of the dimming function and the eyesight correction function (Step S150) is also the same as described above.

For example, if the modes of the dimming function and the eyesight correction function are switched in Step S151, control section 160 determines whether the modes after switching of the dimming function and the eyesight correction function are the function-on modes in Step S152.

If control section 160 determines that the modes after switching of the dimming function and the eyesight correction function are the function-on modes, control section 160 further determines whether to automatically adjust the transmittance and the refractive index (whether it is the function on-automatic mode) in Step S153. If control section 160 determines that it is the mode in which the transmittance and the refractive index are adjusted automatically (that it is the function on-automatic mode), the transmittance and the refractive index are changed based on the information acquired through sensing section 170. Similarly, the transmittance and the refractive index can be changed based on the information from sensing section 170 afterwards.

In contrast, if control section 160 determines that it is not the mode in which the transmittance and the refractive index are adjusted automatically (that it is the function on-manual mode) in Step S153, the transmittance and the refractive index are changed according to an input instruction from the user to input section 140. Similarly, the transmittance and the refractive index are changeable according to an input instruction from the user to input section 140 afterwards.

If control section 160 determines that the modes after switching of the dimming function and the eyesight correction function are the function-off modes in Step S152, control section 160 changes the transmittance and the refractive index to default values in Step S156. Control section 160 does not change the transmittance and the refractive index afterwards.

### (4) Mode Switching Related to Combined Use of Dimming Function and Eyesight Correction Function (Case 2)

An example in which automatic switching between the mode in which both the transmittance and the refractive index of electrically controlled lenses 150 are changeable and the mode in which they are unchangeable (automatic switching of both the dimming function and the eyesight correction function) is performed in accordance with the usage environments (the external environments and the activity state of the user) will be explained with reference to FIGS. 6, 7 and 9.

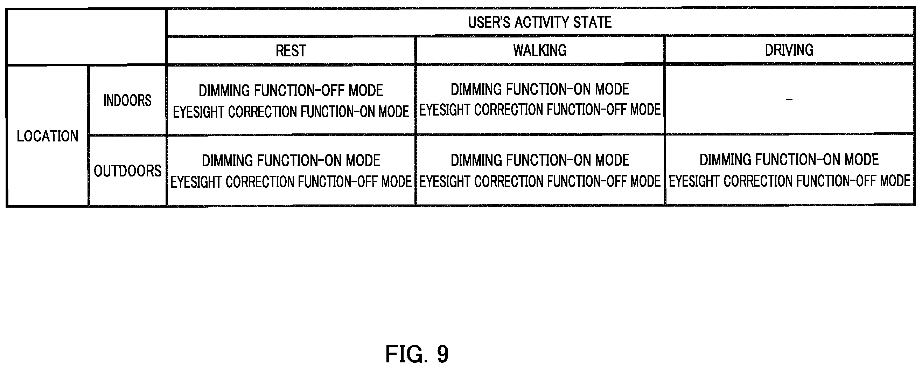

FIG. 9 is a table summarizing how to set the dimming function and the eyesight correction function of eyewear 100 according to the external environments and the activity state of the user. In FIG. 9, when, for example, the location is indoors and the activity state of the user is the rest state, the dimming function-off mode is selected; when the case is other than that (when, even if the location is indoors, the activity state of the user is walking or when the location is outdoors), the dimming function-on mode is selected; and when, even if the location is indoors, the activity state of the user is walking or when the location is outdoors, the eyesight correction function-off mode is selected.

Step S110 is the same as described above.

In Step S120, control section 160 acquires information on the usage environments from sensing section 170, and performs predetermined determination processing. To be specific, the geographical positional information (for example, indoors or outdoors) about eyewear 100 acquired from the position detect sensor (GPS) is compared with the map database acquired in advance in order to determine whether eyewear 100 is indoors or outdoors. Further, the acquired outputs from the acceleration sensor and the position detect sensor (GPS) are compared with predetermined thresholds in order to determine the activity state of the user (rest, walking, or driving).

Here, control section 160 associates geographical positional information acquired from the position detect sensor and information indicating whether being indoors or outdoors determined based on this; and information on the activity state of the user acquired from the acceleration sensor and the position detect sensor, with the time when they were acquired, and stores them in the RAM. Control section 160 then compares the information on the usage environments acquired in this step and the related determination results with the information on the usage environments acquired in the past and read out from the RAM and the related determination results, thereby performing predetermined determination processing.

In Step S130, control section 160 determines whether it is necessary to switch the modes of the dimming function and the eyesight correction function based on the information acquired through sensing section 170.

For example, when determining, according to the results obtained in Step S120, that in the usage environments of eyewear 100, the activity state of the user has changed from the walking state to the rest state and the location has changed from outdoors to indoors (the center bottom cell to the upper left cell in FIG. 9), control section 160 determines that switching from the dimming function-on mode to the dimming function-off mode and switching from the eyesight correction function-off mode to the eyesight correction function-on mode are necessary (Determination 7). Because the location is indoors and the activity state of the user is the rest state, turning off the dimming function and turning on the eyesight correction function can ensure user's view indoors.

In contrast, when determining, according to the results obtained in Step S120, that in the usage environments of eyewear 100, the activity state of the user has changed from walking to driving and the location is outdoors (the center bottom cell to the lower right cell in FIG. 9), control section 160 does not perform switching to the dimming function-off mode or the eyesight correction function-on mode and maintains the dimming function-on mode and the eyesight correction function-off mode (Determination 8). Because it is outdoors, keeping the dimming function on can protect user's eyes.

In Step S130, information on the usage environments acquired in the past that has been acquired in Step S120 is compared with the currently acquired usage environments to determine changes in the environments; however, this is not necessarily the case. For example, determination related to the switching of the mode may be made based on the information on the currently acquired usage environments in accordance with the table shown in FIG. 9 without using the information on the usage environments acquired in the past.

If control section 160 determines that switching of the modes of the dimming function and the eyesight correction function are necessary in step S130, in the same manner as described above, control section 160 further determines whether the information acquired through sensing section 170 corresponds to an exclusion condition (Step S140). If control section 160 determines that it does not correspond to an exclusion condition, control section 160 switches the modes of the dimming function and the eyesight correction function (Step S150).

For example, if control section 160 gives Determination 7 described above in Step S130, control section 160 switches the mode of the dimming function from on to off and the mode of the eyesight correction function from off to on (the center bottom cell to the upper left cell in FIG. 9). The processing then proceeds to Step S160.

In contrast, if control section 160 determines that switching of the modes of the dimming function and the eyesight correction function is unnecessary in Step S130 or if control section 160 determines that the information acquired through sensing section 170 corresponds to an exclusion condition in Step S140, the processing proceeds to Step S170.

For example, if control section 160 gives Determination 8 described above in Step S130, control section 160 does not switch the modes of the dimming function of the eyesight correction function and maintains the dimming function-on mode and the eyesight correction function-off mode (the center bottom cell to the lower right cell in FIG. 9). The processing then proceeds to Step S160.

Steps S150, S160, and S170 are the same as described above.

In the examples of use (1) to (4), mode switching is performed when control section 160 determines that mode switching is necessary based on information on the usage environments, thereby achieving mode switching suitable for the usage environments while reducing the input operation of the user.

In the example described in the example of use (4), both of the modes of the dimming function and the eyesight correction function are switched according to the external environments and the activity state of the user; however, this is not necessarily the case, and as in the aforementioned examples of use (1) and (2), the mode of either the dimming function or the eyesight correction function may be switched according to the external environments and the activity state of the user.

### (Modified Example of Use 1 of Eyewear)

In all the aforementioned examples of use, in Step S130, control section 160 automatically performs mode switching when control section 160 determines that mode switching is necessary; alternatively, either automatic mode switching by control section 160 or manual mode switching triggered by reception of input operation of the user may be selective.

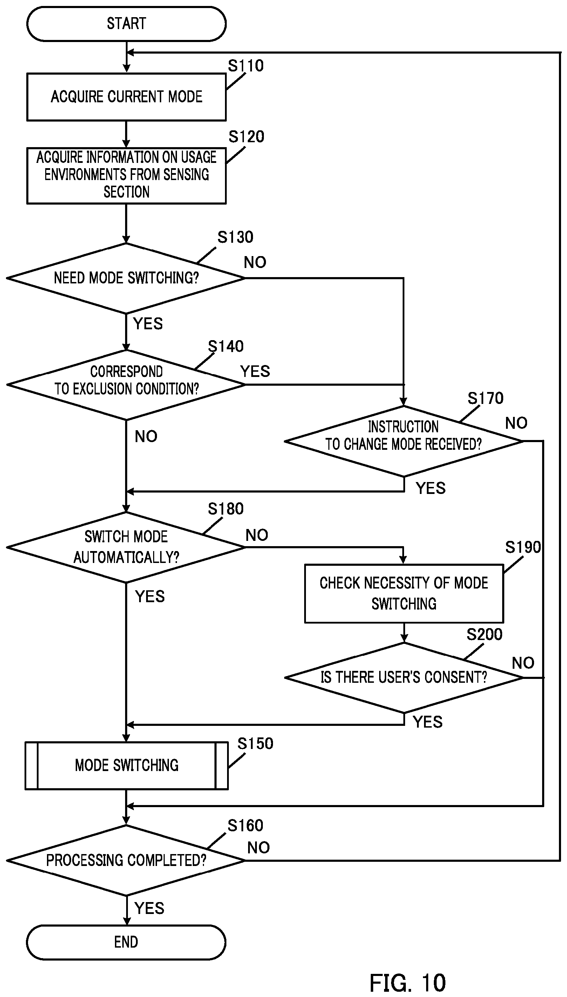

FIG. 10 is a flow chart illustrating an operation example of eyewear 100 in which, when control section 160 determines that mode switching is necessary in this embodiment, either automatic mode switching or manual mode switching triggered by reception of the input operation of the user is selective. FIG. 10 is the same as FIG. 6 except that it further includes Steps S180, S190, and S200 between Step S140 and Step S150.

In particular, if control section 160 determines that it does not correspond to an exclusion condition in step S140, control section 160 further determines whether to switch the mode automatically (Step S180). To be specific, when predetermined conditions for automatic mode switching are satisfied, to perform automatic mode switching, the "dimming function on-automatic mode" is selected (Step S150).

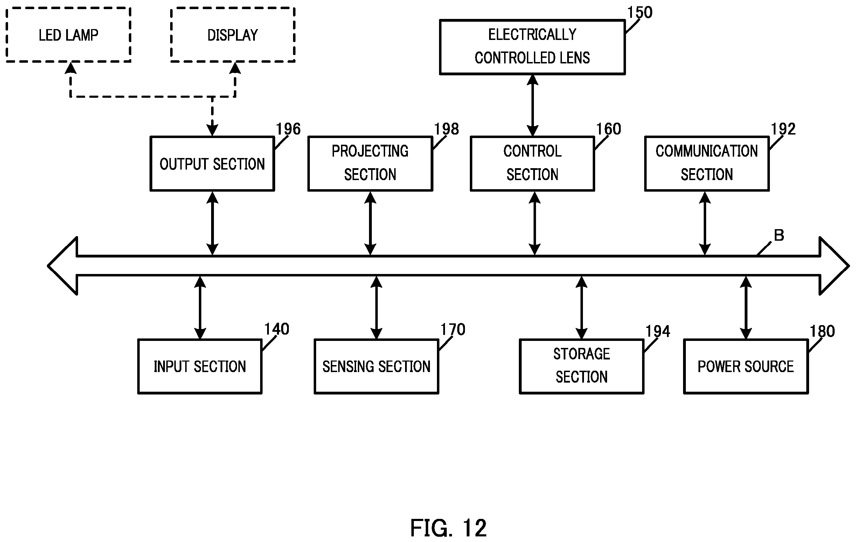

In contrast, when the aforementioned conditions are not satisfied, the user is asked whether or not mode switching is necessary (Step S190). In Step S190, control section 160 presents a "name of the destination mode of switching" and a " user interface (UI) for allowing selection of necessity or unnecessity of switching" to the user. The presentation of the "name of the destination mode of switching" and the "user interface (UI) for allowing selection of necessity or unnecessity of switching" can be made, for example, through a smartphone or other displays that has received information transmitted via communication section 192 of eyewear 100 (see FIG. 12).

Control section 160 then determines whether there is user's consent to switch the mode (Step S200). If there is user's consent to switch the mode, mode switching is performed (Step S150). If there is no user's consent to switch the mode, the processing proceeds to Step S160.

In this modified example of use 1, when control section 160 determines that mode switching is necessary, mode switching is not always performed automatically but is triggered by reception of input operation of the user, thereby achieving appropriate mode switching that matches user's needs.

Although control section 160 selects automatic or manual mode switching in Step S180 in this modified example of use 1, this is not necessarily the case and the selection may be made according to reception of user's input or default settings.

### (Modified Example of Use 2 of Eyewear)

In the aforementioned examples of use (3) and (4) and modified example of use 1, switching between the changeable mode and the unchangeable mode is performed independently for two optical properties based on the information acquired through sensing section 170; alternatively, in accordance with the result of switching between the mode in which one optical property is changeable and the mode in which it is unchangeable, switching between the mode in which the other optical property is changeable and the mode in which it is unchangeable may be performed.

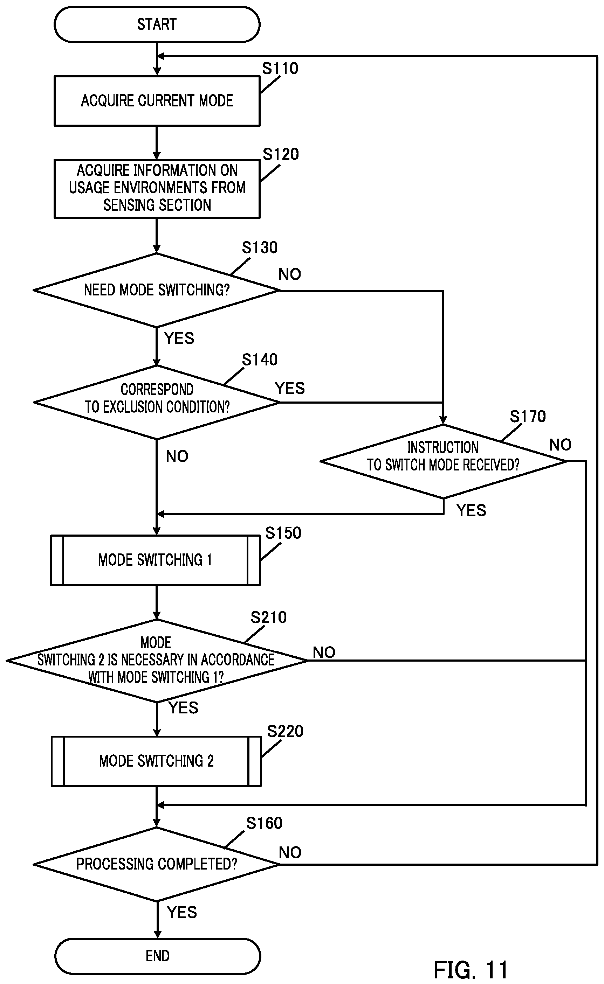

FIG. 11 is a flowchart illustrating an operation example of eyewear 100 performed when the mode of the other optical property is switched in accordance with the result of switching of the mode of the one optical property and the usage environments in this embodiment. FIG. 11 is the same as FIG. 6 except that it further includes Steps S210 and S220 between Steps S150 and S160.

In other words, in Step S150, if control section 160 switches the mode of one of the two optical properties, control section 160 further determines, in accordance with the result of switching of the mode of the one optical property, whether switching of the mode of the other optical property is necessary (Step S210). To be specific, when the result of switching of the mode of the one optical property satisfies a predetermined condition, it is determined that switching of the mode of the other optical property is necessary.

If it is determined that switching of the mode of the other optical property is necessary in Step S210, control section 160 switches the mode of the other optical property (Step S220). In contrast, if it is determined that switching of the mode of the other optical property is not necessary in Step S210, the processing proceeds to Step S160.

For example, if the mode of the eyesight correction function is switched from the function-off mode to the function-on mode in Step S150, control section 160 acquires information on the usage environments and the current mode of the dimming function, and determines whether to perform mode switching for the dimming function in Step S210.

When the current mode of the dimming function is the function-on mode, control section 160 may switch the dimming function to the function-off mode if, for example, the eyewear is indoors in Step S220.

When the current mode of the dimming function is the function-off mode, if, for example, the eyewear is outdoors, control section 160 may switch the dimming function to the function-on mode in Step S220. Regarding the transmittance of electrically controlled lenses 150 at the time of the switching of the dimming function to the function-on mode, since, for example, when the eyewear is indoors, clearer view around user's hands is more desirable than outdoors, the transmittance is adjusted so that it is higher in the "dimming function-on mode" in which it is determined to be indoors, than in the "dimming function-on mode" in which it is determined to be outdoors. In addition, when the "dimming function-on mode" is selected with the eyesight correction function on, the transmittance is preferably adjusted so that it is higher than in the case where the eyesight correction function is off.

If the mode of the eyesight correction function is switched from the function-on mode to the function-off mode in Step S150, control section 160 determines whether to perform mode switching for the dimming function in Step S210.

When the current mode of the dimming function is the function-on mode, control section 160 switches the dimming function to the function-off mode, and brings the sleep mode or switches off the power source in Step S220. Hence, the fact that the mode of the eyesight correction function was switched off consequently triggers the switch-off of the dimming function. In Step S150, after the mode of the eyesight correction function is switched from on to off, upon detection of the fact that the eyewear has not been moved for a predetermined time based on the output of the acceleration sensor or the like, the dimming function may be switched to the function-off mode, and the sleep mode may be brought or the power source may be turned off.

If the mode of the dimming function is switched from off to on in Step S150, control section 160 determines whether to perform mode switching for the eyesight correction function in Step S210.

For example, when the current mode of the eyesight correction function is the function-on mode, control section 160 switches the eyesight correction function to the function-off mode if it is determined that the eyewear is outdoors in Step S220. The fact that the mode of the dimming function was switched consequently triggers the switch-off of the unneeded eyesight correction function, thereby saving power.

If the mode of the dimming function is switched from on to off in Step S150, control section 160 determines whether to perform mode switching for the eyesight correction function.

When the current mode of the eyesight correction function is the function-off mode, control section 160 may switch the eyesight correction function to the function-on mode if, for example, the user is indoors in Step S220.

When the current mode of the eyesight correction function is the function-on mode, in Step S220, upon, for example, detection of the fact that the eyewear has not been moved for a predetermined time based on the output of the acceleration sensor or the like, control section 160 may also switch the eyesight correction function to the function-off mode, and bring the sleep mode or switch off the power source.

In this modified example of use 2, when control section 160 performs mode switching for one optical property, mode switching for the other optical property is performed in accordance with the result of that mode switching, thereby achieving mode switching suitable for the usage environments while reducing the load of user's operation.

In this modified example of use 2, control section 160 performs mode switching between the mode in which the other optical property is changeable and the mode in which it is unchangeable, in accordance with the result of mode switching between the mode in which the one optical property is changeable and the mode in which it is unchangeable; however, this is not necessarily the case and switching between the mode in which the other optical property is changeable automatically (the mode in which parameter adjustment is performed automatically) and the mode in which the other optical property is changeable manually (the mode in which parameter adjustment is performed manually) may be performed.

For example, upon switching of the mode of the eyesight correction function from off to on in Step S150, if the current mode of the dimming function in Step S220 is "the on mode in which the transmittance can be automatically changed" (the dimming function on-automatic mode) and the user is indoors, dimming can be preferably manually adjusted; therefore, control section 160 may switch the mode of the dimming function to "the on mode in which the transmittance can be manually changed" (the dimming function on-manual mode).

In addition, upon switching of the mode of the eyesight correction function from on to off in Step S150, if the current mode of the dimming function in Step S220 is "the on mode in which the transmittance can be automatically changed" (the dimming function on-automatic mode) and the user is outdoors, dimming can be preferably manually adjusted in some cases; therefore, control section 160 may switch the mode of the dimming function to "the on mode in which the transmittance can be manually changed" (the dimming function on-manual mode).

In addition, upon switching of the mode of the dimming function from off to on in Step S150, if the current mode of the eyesight correction function in Step S220 is "the on mode in which the refractive index can be automatically changed" (the eyesight correction function on-automatic mode), the user is outdoors and eyesight correction thus can be preferably manually adjusted; therefore, control section 160 may switch the mode of the eyesight correction function to "the on mode in which the refractive index can be manually changed" (the eyesight correction function on-manual mode).

In this embodiment, Step S170 for receiving input operation of the user is executed either when control section 160 determines that mode switching is not necessary in Step S130 or when control section 160 determines that the information corresponds to an exclusion condition in Step S140; however, this is not necessarily the case and Step S170 may be omitted.

In addition, in this embodiment, Step S140 in which control section 160 determines whether information acquired through sensing section 170 corresponds to an exclusion condition is further executed when control section 160 determines that mode switching is necessary in Step S130; however, this is not necessarily the case and Step S140 may be omitted.

In addition, in this embodiment, the optical properties are changed when control section 160 switches the mode (to the mode in which the optical property is changeable) in Step S150; however, this is not necessarily the case and even when mode switching is not performed, if the current mode is the mode in which the optical property is changeable, the optical properties may be changed always based on the information acquired through sensing section 170.

In addition, in this embodiment, if the mode after switching is the function-on mode, control section 160 adjusts the optical properties between two levels (on/off) in Step S150; however, this is not necessarily the case and adjustment with the multiple levels shown in FIG. 5 may be performed, for example.

In addition, in this embodiment, there is one pattern (degree of adjustment) of changing the first optical property at the time of selection of the function-on mode of the first optical property in Step S150; however, this is not necessarily the case and there may be multiple patterns of changing the first optical property as shown in FIG. 5, for example. In other words, the function-on mode of the first optical property (preferably the function on-automatic mode) may include multiple modes with different patterns of changing the first optical property of the optical module. In the function-on mode of the first optical property, control section 160 may perform switching to any one of the multiple modes based on the information acquired through sensing section 170. For example, the dimming function-on mode may include multiple modes with different patterns of changing the transmittance (for example, the indoors mode: light-colored dimming function-on mode, and the outdoors mode: dark dimming function-on mode).

Further, in this embodiment, when the mode in which the optical property is changeable is selected, Step S153 for selecting whether to change the optical properties automatically or manually is performed; however, this is not necessarily the case and Step S153 may be omitted. For example, if it is determined that the mode after switching is the mode in which the optical property is changeable in Step S152, control section 160 may change the optical properties automatically in accordance with the information acquired through sensing section 170.

Further, in this embodiment, Step S130 does not include the step of associating the conditions under which control section 160 has determined that mode switching was necessary (information on the usage environments) with the mode after switching and storing them; however, this is not necessarily the case and the step of associating the conditions under which control section 160 has determined that mode switching was necessary (information on the usage environments) with the mode after switching and recording them to the storage section may further be executed (see FIG. 12 described below).

Further, in this embodiment, eyewear 100 has the functional configuration illustrated in FIG. 3; however, this is not necessarily the case and it may have any other functional configurations.

FIG. 12 is a block diagram illustrating another example of the functional configuration of an eyewear. As illustrated in FIG. 12, eyewear 100 may include communication section 192 that can communicate with other devices; storage section 194 that associates, after mode switching by control section 160, the conditions under which mode switching has been performed (information on the usage environments) with the type of the mode after the switching and stores them; and output section 196 that can be connected wirelessly or wired to an external notification apparatus that provides a notification indicating a change in the function such as an LED lamp or a displaying apparatus such as a display. The function sections included in the eyewear are connected to each other by bus B.

At this time, for example, after the mode switching by control section 160, storage section 194 may associate the conditions under which the mode has switched (information on the usage environments) with the type of the mode after the switching and store them in the aforementioned embodiment. Subsequently, at the time of mode switching with the automatic function, control section 160 may read the determination conditions stored in the storage section and determine whether to perform mode switching in accordance with them.

Further, in this embodiment, electrically controlled lenses 150 include two electroactive portions (refractive index changeable layer 1530 and transmittance changeable layer 1570); however, this is not necessarily the case and electrically controlled lenses 150 may include only either of them or three or more electroactive portions.

Further, in this embodiment, there are one or two types of optical properties to be changed by control section 160; this is not necessarily the case and there may be three or more types of optical properties.

Further, this embodiment takes an electrically controlled lens as an example of an optical module in which the optical properties are changed by electric control; however, this is not necessarily the case and it may be an optical module that includes projecting section 198 and a section to be projected (for example, a transparent plate) (not shown in the drawings) and is capable of projecting images and videos.

The contents disclosed in the specification, accompanying drawings, and abstract included in Japanese Patent Application No. 2017-047410 filed on March 13, 2017 are incorporated herein by reference in its entirety.

### Industrial Applicability

In an eyewear of the present invention, the mode related to whether to change the optical properties can be switched according to the usage environments. Therefore, the eyewear of the present invention is expected to contribute to the spread and development of the eyewear in the present field.

### Reference Signs List

100 Eyewear
110 Front
112 Rim
114 Bridge
120a, 120b Temple
130 Frame
140 Input section
150 Electrically controlled lens
150a First region
150b Second region
160 Control section
165 CPU unit
170 Sensing section
180 Power source
192 Communication section
194 Storage section
196 Output section
198 Projecting section
1510 First transparent substrate
1520 First transparent electrode
1530 Refractive index changeable layer
1535 Adhesive layer
1540 Second transparent electrode
1550 Second transparent substrate
1560 Third transparent electrode
1570 Transmittance changeable layer
1580 Fourth transparent electrode
1590 Third transparent substrate

## Claims

1. An eyewear (100), comprising:
a frame (130);
an optical module (150) to be disposed on the frame (130), the optical module (150) having an optical property to be changed by electric control;
a sensing section (170) that acquires information on usage environments; and
a control section (160) that changes the optical property of the optical module (150) based on the information acquired through the sensing section (170),
the optical property includes at least a first optical property and a second optical property, **characterized in that**
the control section (160) performs, when a power source is on state, switching between a changeable mode and an unchangeable mode based on the information acquired through the sensing section (170),
the changeable mode is a mode in which the control section (160) changes the optical property based on the information acquired through the sensing section (170),
the changeable mode includes:
a mode in which the first optical property is changeable, the mode changing the first optical property of the optical module (150), and
a mode in which the second optical property is changeable, the mode changing the second optical property of the optical module (150);
the unchangeable mode is a mode in which the control section (160) does not change the optical property even when the control section (160) acquires the information through the sensing section (170),
the control section (160) changes the optical property of the optical module (150) in the changeable mode, and
the control section (160) performs, based on a result of switching between the changeable mode and the unchangeable mode for one of the first optical property and the second optical property, switching between the changeable mode and the unchangeable mode for the other of the first optical property and the second optical property.

2. The eyewear (100) according to claim 1, wherein the information on the usage environments is at least one of the following: geographical positional information; an activity state of a user; a posture of the user; a wearing state of the eyewear (100) on the user; an inclination of the eyewear (100); light intensity under the usage environments; and presence or absence of detection of another apparatus.

3. The eyewear (100) according to claim 1 or 2, further comprising an input section (140) that receives input operation, wherein
the changeable mode includes:
an automatic mode in which the control section (160) automatically changes the
optical property when the information acquired through the sensing section (170) satisfies a predetermined condition, and
a manual mode in which the control section (160) changes the optical property upon reception of input operation of a user on the input section (140), and
the control section (160) selectively executes either the automatic mode or the manual mode.

4. The eyewear (100) according to claim 1, wherein the optical module (150) includes:
a first electroactive portion (1570) in which the first optical property is changed by control by the control section (160); and
a second electroactive portion (1530) in which the second optical property is changed by control by the control section (160).

5. The eyewear (100) according to claim 1 or 4, wherein the control section (160) performs switching between the changeable mode and the unchangeable mode, based on geographical positional information and light intensity under the usage environments.

6. The eyewear (100) according to any one of claims 1 to 5, wherein
the mode in which the first optical property is changeable includes a plurality of modes with different patterns of changing the first optical property of the optical module (150), and
in the changeable mode, the control section (160) performs switching to any one of the plurality of modes, based on the information acquired through the sensing section (170).

7. The eyewear (100) according to any one of claims 1 to 6, wherein
the first optical property is a transmittance, and
the second optical property is a refractive index.

## Patentansprüche

1. Brille (100), die Folgendes umfasst:
ein Gestell (130);
ein optisches Modul (150), das auf dem Gestell (130) anzuordnen ist, wobei das optische Modul (150) eine optische Eigenschaft aufweist, die durch elektrische Steuerung zu ändern ist;
einen Erfassungsabschnitt (170), der Informationen über Nutzungsumgebungen erfasst; und
einen Steuerabschnitt (160), der die optische Eigenschaft des optischen Moduls (150) basierend auf den durch den Erfassungsabschnitt (170) erfassten Informationen ändert,
wobei die optische Eigenschaft mindestens eine erste optische Eigenschaft und eine zweite optische Eigenschaft beinhaltet, **dadurch gekennzeichnet, dass**
der Steuerabschnitt (160), wenn eine Stromquelle eingeschaltet ist, Umschalten zwischen einem veränderbaren Modus und einem unveränderbaren Modus basierend auf den durch den Erfassungsabschnitt (170) erfassten Informationen durchführt,
der veränderbare Modus ein Modus ist, in dem der Steuerabschnitt (160) die optische Eigenschaft basierend auf den durch den Erfassungsabschnitt (170) erfassten Informationen ändert,
der veränderbare Modus Folgendes umfasst:
einen Modus, in dem die erste optische Eigenschaft veränderbar ist, wobei der Modus die erste optische Eigenschaft des optischen Moduls (150) verändert, und
einen Modus, in dem die zweite optische Eigenschaft veränderbar ist, wobei der Modus die zweite optische Eigenschaft des optischen Moduls (150) verändert;
wobei der unveränderbare Modus ein Modus ist, in dem der Steuerabschnitt (160) die optische Eigenschaft nicht verändert, selbst wenn der Steuerabschnitt (160) die Informationen durch den Erfassungsabschnitt (170) erfasst, der Steuerabschnitt (160) die optische Eigenschaft des optischen Moduls (150) im veränderbaren Modus verändert, und der Steuerabschnitt (160), basierend auf einem Ergebnis des Umschaltens zwischen dem veränderbaren Modus und dem unveränderbaren Modus für eine der ersten optischen Eigenschaft und der zweiten optischen Eigenschaft, ein Umschalten zwischen dem veränderbaren Modus und dem unveränderbaren Modus für die andere der ersten optischen Eigenschaft und der zweiten optischen Eigenschaft durchführt.

2. Brille (100) nach Anspruch 1, wobei die Informationen über die Nutzungsumgebungen mindestens eines der Folgenden sind: Geografische Positionsinformationen; ein Aktivitätszustand eines Benutzers; eine Haltung des Benutzers; ein Tragezustand der Brille (100) auf dem Benutzer; eine Neigung der Brille (100); Lichtintensität unter den Nutzungsumgebungen; und Vorhandensein oder Fehlen einer Detektion einer anderen Vorrichtung.

3. Brille (100) nach Anspruch 1 oder 2, die ferner einen Eingabeabschnitt (140) umfasst, der eine Eingabeoperation empfängt, wobei
der veränderbare Modus Folgendes umfasst:
einen automatischen Modus, in dem der Steuerabschnitt (160) automatisch die optische Eigenschaft verändert, wenn die durch den Erfassungsabschnitt (170) erfassten Informationen eine vorbestimmte Bedingung erfüllen, und
einen manuellen Modus, in dem der Steuerabschnitt (160) die optische Eigenschaft bei Empfang einer Eingabeoperation eines Benutzers an dem Eingabeabschnitt (140) verändert, und der Steuerabschnitt (160) wahlweise entweder den automatischen Modus oder den manuellen Modus ausführt.

4. Brille (100) nach Anspruch 1, wobei das optische Modul (150) Folgendes beinhaltet:
einen ersten elektroaktiven Teil (1570), in dem die erste optische Eigenschaft durch Steuerung durch den Steuerabschnitt (160) verändert wird; und
einen zweiten elektroaktiven Teil (1530), in dem die zweite optische Eigenschaft durch Steuerung durch den Steuerabschnitt (160) verändert wird.

5. Brille (100) nach Anspruch 1 oder 4, wobei der Steuerabschnitt (160) ein Umschalten zwischen dem veränderbaren Modus und dem unveränderbaren Modus basierend auf geografischen Positionsinformationen und Lichtintensität unter den Nutzungsumgebungen durchführt.

6. Brille (100) nach einem der Ansprüche 1 bis 5, wobei der Modus, in dem die erste optische Eigenschaft veränderbar ist, mehrere Modi mit unterschiedlichen Mustern zum Verändern der ersten optischen Eigenschaft des optischen Moduls (150) beinhaltet, und
der Steuerabschnitt (160) in dem veränderbaren Modus ein Umschalten auf einen beliebigen der mehreren Modi durchführt, basierend auf den durch den Erfassungsabschnitt (170) erfassten Informationen.

7. Brille (100) nach einem der Ansprüche 1 bis 6, wobei die erste optische Eigenschaft eine Lichtdurchlässigkeit ist, und
die zweite optische Eigenschaft ein Brechungsindex ist.

## Revendications

1. Lunettes (100), comprenant :
une monture (130) ;
un module optique (150) devant être disposé sur la monture (130), le module optique (150) ayant une propriété optique devant être modifiée par commande électrique ;
une section de détection (170) qui acquiert des informations sur des environnements d'utilisation ; et
une section de commande (160) qui modifie la propriété optique du module optique (150) sur la base des informations acquises par la section de détection (170),
la propriété optique incluant au moins une première propriété optique et une deuxième propriété optique, **caractérisées en ce que**
la section de commande (160) effectue, quand une source d'alimentation est allumée, une commutation entre un mode modifiable et un mode non modifiable sur la base des informations acquises par la section de détection (170),
le mode modifiable est un mode dans lequel la section de commande (160) modifie la propriété optique sur la base des informations acquises par la section de détection (170),
le mode modifiable inclut :
un mode dans lequel la première propriété optique est modifiable, le mode modifiant la première propriété optique du module optique (150), et
un mode dans lequel la deuxième propriété optique est modifiable, le mode modifiant la deuxième propriété optique du module optique (150),
le mode non modifiable est un mode dans lequel la section de commande (160) ne modifie pas la propriété optique, même quand la section de commande (160) acquiert les informations par la section de détection (170),
la section de commande (160) modifie la propriété optique du module optique (150) dans le mode modifiable, et
la section de commande (160) effectue, sur la base d'un résultat de commutation entre le mode modifiable et le mode non modifiable pour une propriété parmi la première propriété optique et la deuxième propriété optique, une commutation entre le mode modifiable et le mode non modifiable pour l'autre propriété parmi la première propriété optique et la deuxième propriété optique.

2. Lunettes (100) selon la revendication 1, les informations sur les environnements d'utilisation en étant au moins une des suivantes : information de position géographique ; état d'activité d'un utilisateur ; posture de l'utilisateur ; état de port des lunettes (100) sur l'utilisateur ; inclinaison des lunettes (100) ; intensité lumineuse dans les environnements d'utilisation ; et présence ou absence de détection d'un autre appareil.

3. Lunettes (100) selon la revendication 1 ou 2, comprenant en outre une section d'entrée (140) qui reçoit une opération d'entrée, dans lesquelles
le mode modifiable inclut :
un mode automatique dans lequel la section de commande (160) modifie automatiquement la propriété optique quand les informations acquises par la section de détection (170) satisfont une condition prédéterminée, et
un mode manuel dans lequel la section de commande (160) modifie la propriété optique lors de la réception d'une opération d'entrée d'un utilisateur sur la section d'entrée (140), et
la section de commande (160) exécute sélectivement le mode automatique ou le mode manuel.

4. Lunettes (100) selon la revendication 1, le module optique (150) comportant :
une première partie électroactive (1570) dans laquelle la première propriété optique est modifiée par commande par la section de commande (160) ; et
une deuxième partie électroactive (1530) dans laquelle la deuxième propriété optique est modifiée par commande par la section de commande (160).

5. Lunettes (100) selon la revendication 1 ou 4, la section de commande (160) effectuant une commutation entre le mode modifiable et le mode non modifiable sur la base d'une information de position géographique et d'une intensité lumineuse dans les environnements d'utilisation.

6. Lunettes (100) selon l'une quelconque des revendications 1 à 5, dans lesquelles
le mode dans lequel la première propriété optique est modifiable inclut une pluralité de modes avec différents motifs de modification de la première propriété optique du module optique (150), et
dans le mode modifiable, la section de commande (160) effectue une commutation vers un quelconque mode de la pluralité de modes, sur la base des informations acquises par la section de détection (170).

7. Lunettes (100) selon l'une quelconque des revendications 1 à 6, dans lesquelles
la première propriété optique est un facteur de transmission, et
la deuxième propriété optique est un indice de réfraction.
